# EUROPEAN PATENT SPECIFICATION

(11) **EP 2 498 267 B1**
(45) Date of publication and mention of the grant of the patent: **14.06.2017**
(21) Application number: 11157463.8
(22) Date of filing: 09.03.2011
(51) Int. Cl.: H01F 41/02

(54) **Layered magnet**
Schichtmagnet
Aimant stratifié

(43) Date of publication of application: 12.09.2012
(73) Proprietor: Siemens Aktiengesellschaft, 80333 München (DE)
(72) Inventor: Urda, Adriana Cristina, 5230 Odense M (DK); Groendahl, Erik, 8653 Them (DK); Stiesdal, Henrik, 5000 Odense C (DK)

(56) References cited:
- EP-A2- 2 085 982
- JP-A- 2007 273 815
- US-A1- 2010 007 232

## Description

The invention describes a layered magnet, and a method of manufacturing a layered magnet.

In an electrical machine such as a generator or motor, a plurality of magnets is arranged opposite a plurality of coils or windings. Generally, particularly in large electrical machines, the magnets are arranged on the rotating component, namely the rotor, and the windings are arranged on the stationary component, namely the stator. For the sake of simplicity in the following description, such an arrangement may be assumed, although it will be pointed out that the magnets could equally well be attached to the stator and the windings could be arranged on the rotor.

In the case of a generator, the magnets may be permanent magnets made of a hard ferromagnetic material which is magnetized using a suitably strong magnetic field, and which retains its magnetic moment over its lifetime. In an electrical generator, the strong magnetic fields of the permanent magnets induce electrical currents in the stator windings. However, the magnetic field of a permanent magnet is not uniform, and demagnetizing fields act to reduce the total magnetic moment of the magnet. The coercivity of a permanent magnet, or its ability to resist demagnetization, can be improved by the addition of small quantities of rare-earth (lanthanide) metals such as Neodymium (Nd) or Dysprosium (Dy). Therefore, using an arrangement of such rare-earth permanent magnets can improve the efficiency of an electrical generator.

In the known types of rare-earth permanent magnets, one or more suitable lanthanide metals such as Neodymium, Dysprosium, Samarium (Sm), etc. is combined with the material of the magnet during the manufacturing process in order to increase the magnetic isolation between grains of the magnet material and to increase the coercivity of the magnet, for example as described in EP 2 085 982 A2. The coercivity of the magnet is directly related to the concentration of the chosen lanthanide. In a powder sintering method usually used in the manufacture of large permanent magnets, a magnet material such as iron (Fe) is combined in powder form with any lanthanides and other materials, such as Boron (B) in the case of a NdFeB magnet, pressed into a mould, and sintered. In this approach, the lanthanides are essentially evenly distributed in the body of the magnet, giving a homogenous coercivity.

However, lanthanides such as Dysprosium are very expensive, and add considerably to the overall costs of an electrical machine. In a small electrical machine, the magnets are also correspondingly small, as described in JP 2007 273815, in which magnets are formed with dimensions of only about 1 mm thickness and 7 mm square. The larger the machine, the more material is required for the correspondingly large magnets. For example, a multi-pole direct-drive generator of a wind turbine can have a diameter in the region of 7 m - 10 m and a length of about 2 m, and can require a few hundred permanent magnets each of which can be several centimetres in width and height, and can be up to 2 m in length to extend along the length of the rotor. Even the layer arrangements described in JP 2007 273815 can require excessive amounts of a lanthanide.

Therefore, it is an object of the invention to provide a more economic rare-earth permanent magnet.

This object is achieved by the layered magnet of claim 1; by the method of claim 7 of manufacturing a layered magnet; by the magnet arrangement of claim 10; and by the electrical machine of claim 11.

According to the invention, the layered magnet for a magnet arrangement of an electrical machine comprises at least one primary magnet layer and a number of subordinate magnet layers, wherein each magnet layer comprises a ferromagnet with a layer concentration of a lanthanide, and wherein the layer concentration of the lanthanide is greatest in a primary magnet layer, wherein the primary magnet layer is arranged at an outer region of the layered magnet, characterized in that the layered magnet comprises a mounting surface and at least one lateral surface, and wherein the layer concentrations of the lanthanide decrease towards the mounting surface and increase towards the lateral surface.

An advantage of the layered magnet according to the invention is that the total amount of the lanthanide can be kept to a minimum, while at the same time providing a rare-earth permanent magnet with very favourable coercivity properties. The invention is based on observations of the demagnetizing forces acting on a permanent magnet during operation of an electrical machine. It has been observed that the demagnetization forces do not act on all regions of the magnet to an equal extent, and therefore not all regions of the magnet benefit from a high coercivity. The magnetic field strength is greatest at the outer regions of the magnet, i.e. the regions closer to the field. These are the regions that are closest to the air gap, and the demagnetizing fields are strongest in those regions. In prior art rare-earth permanent magnets, in which the lanthanide concentration is uniform over the magnet, a considerable portion of the lanthanide is effectively "wasted", since a high coercivity is not actually required in all regions of the magnet. In the layered magnet according to the invention, in which magnet layers with different quantities or concentrations of the lanthanide are used, a higher concentration of the lanthanide can be obtained where it is most beneficial, i.e. in those regions of the magnet in which a high coercivity is required, while a lower concentration can be used in those parts of the magnet in which a high coercivity is of no benefit. In contrast to the known types of rare-earth permanent magnets, the layered magnet according to the invention uses only as much lanthanide as is actually required to withstand the demagnetization fields in the various regions of the magnet.

According to the invention, the method of manufacturing a layered magnet for a magnet arrangement of an electrical machine comprises the steps of forming a number of primary magnet layers and a number of subordinate magnet layers, wherein each magnet layer comprises a ferromagnet, introducing layer concentrations of a lanthanide in the magnet layers such that the layer concentration of the lanthanide is greatest in a primary magnet layer, and arranging the magnet layers to give a layered magnet with a mounting surface and at least one lateral surface, wherein the layer concentrations of the lanthanide decrease towards the mounting surface and increase towards the lateral surface, and wherein the primary magnet layer is arranged at an outer region of the layered magnet.

An advantage of the method according to the invention is that each magnet layer can be manufactured using a suitable known technique, for example the technique of powder sintering, and the layers can be stacked to obtain a permanent magnet with an overall inhomogeneous and favourably economical distribution of one or more lanthanides.

According to the invention, the magnet arrangement for an electrical machine comprises a plurality of such layered magnets arranged on a rotor or stator of the electrical machine.

According to the invention, the electrical machine comprises such a magnet arrangement.

Particularly advantageous embodiments and features of the invention are given by the dependent claims, as revealed in the following description.

For the sake of simplicity, but without restricting the invention in any way, it may be assumed in the following that the electrical machine is a generator, for example a direct-drive generator of a wind turbine, and that the layered magnets are arranged on the rotor of the turbine. Usually, the underside or mounting surface of a permanent magnet is glued or otherwise attached to the outer surface of the rotor, so that the magnet protrudes above the rotor outer surface. Such a magnet is also generally essentially rectangular in shape, with two long sides or lateral surfaces and a top surface. In the following, the terms 'magnet', 'layered magnet', 'permanent magnet' and 'rare-earth permanent magnet' may be used interchangeably in reference to a layered magnet according to the invention.

In the following, for the sake of simplicity, Dysprosium is referred to as the lanthanide incorporated into the layered magnet. However, this is not to be interpreted as a restriction to Dysprosium only, and it will be understood that other appropriate lanthanides could be used instead of or in addition to Dysprosium.

As indicated above, depending on the magnetic circuit design of the electrical machine, an outer region of the magnet (the region closest to the air-gap) may be subject to a higher demagnetizing field, while regions of the magnet further removed from the air-gap are subject to weaker demagnetizing fields. As already indicated above, the primary magnet layer is arranged at an outer region of the layered magnet, which outer region lies adjacent to the air-gap of the electrical machine.

As mentioned above, the layered magnet comprises a mounting surface and at least one lateral surface, and the layer concentrations of the lanthanide decrease towards the mounting surface and/or increase towards the lateral surface.

Since the mounting surface of the magnet is furthest from the air-gap, it is advantageous to have the layer concentrations of Dysprosium decrease towards the mounting surface. In such an embodiment, a primary magnet layer can be arranged at the 'upper' surface of the magnet so that the highest Dysprosium concentration is closest to the air-gap.

Since the air-gap extends to the regions between adjacent magnets, the demagnetizing field is strong along the long sides of the magnet also. Therefore, it may be advantageous to arrange a primary magnet layer along one or both outer edges of the magnet, essentially parallel to the longitudinal axis of the magnet, such that high Dysprosium concentrations are achieved along the outer sides of the magnet.

It has been observed that a favourable resistance to demagnetization can be obtained by a concentration of Dysprosium in the region of a few percent, e.g. 5% to 6%, of the mass of a prior art magnet with homogenous Dysprosium distribution. Therefore, in a particularly preferred embodiment of the invention, the layer concentration of Dysprosium in the primary magnet layer comprises at least 5% of the mass of the primary magnet layer.

Since the primary magnet layer has the greatest concentration of Dysprosium and is arranged in that region of the magnet in which the highest coercivity is required, it may be advantageous if this region presents a relatively large fraction of the overall magnet. Therefore, in a further preferred embodiment of the invention, the primary magnet layer has a layer thickness greater than the thickness of any subordinate magnet layer. By using a relatively large primary magnet layer and a number of smaller or thinner subordinate layers, a relatively large region of the magnet with high coercivity can be obtained, while the other regions exhibit a low coercivity owing to their relatively smaller volume as well as their lower concentration of Dysprosium.

As already indicated above, permanent magnets for use in an electrical machine such as a wind turbine are large, and can easily be up to several metres in length and several centimetres in width and height. Accordingly, the demagnetizing fields throughout the magnet can be of significant strength. Therefore, in a particularly preferred embodiment of the invention, the Dysprosium fraction of a magnet layer is combined with the magnet material such that the Dysprosium is essentially evenly distributed through the body of that magnet layer. This can be achieved by the powder sintering process described above. Particularly for a magnet layer of relatively large thickness, for example 20 mm, and/or for a magnet layer arranged close to the air-gap, the powder sintering technique can provide a satisfactorily homogeneous distribution of Dysprosium. A technique of grain-boundary diffusion (GBD) can also be applied to improve the magnetic properties of a completed layer.

For a thinner magnet layer and/or for a magnet layer arranged further away from the air-gap, an alternative, simpler manufacturing technique could be applied. In such an embodiment of the invention, the Dysprosium fraction of a magnet layer can be diffused into that magnet layer in a prior diffusion process. For example, it may be sufficient to coat such a thin magnet layer with a 'green sheet' comprising a resin binder into which one or more lanthanides have been mixed, for example Dysprosium together with an amount of Neodymium, and sintering the coated magnet. The result is a magnet layer in which the lanthanide fraction is concentrated largely at its surface. This technique can provide satisfactory results for a magnet layer with a thickness of only a few millimetres.

The magnet layers can be arranged in a number of different ways to give the final layered magnet. A first preferred embodiment of a layered magnet comprises a horizontal stack of magnet layers, which stack can be mounted on the rotor essentially parallel to an outer surface of the rotor. In this embodiment, the magnet layer at the mounting surface, i.e. the subordinate layer at the bottom of the stack, has the lowest concentration of Dysprosium, while the magnet layer at the upper surface, i.e. the primary layer of the stack, has the highest concentration of Dysprosium.

A second preferred embodiment of a layered magnet comprises a vertical stack of magnet layers, which stack can be mounted on the rotor such that the layers are arranged essentially upright or perpendicular to the surface of the rotor. In this embodiment of the layered magnet, the mounting surface comprises one side face of each magnet layer, while a lateral surface of the layered magnet comprises a primary magnet layer with a highest concentration of Dysprosium. Subordinate magnet layers with lower concentrations of Dysprosium can be 'sandwiched' between the primary layers.

Of course, these horizontal and vertical stack designs could be combined to give a 'checkerboard' type of design. With such a combination, it would be possible to have a high Dysprosium content in all outer regions of the layered magnet, and a low Dysprosium content in all internal or inner regions.

By having the high concentration of Dysprosium in only certain regions of the magnet, the overall Dysprosium content of a magnet according to the invention is significantly less than that of a comparable prior art rare-earth permanent magnet. In a particularly preferred embodiment of the layered magnet according to the invention, the total Dysprosium content comprises at most 4.8%, more preferably at most 4.4%, most preferably at most 4.0% of the magnet mass. For example, for a layered magnet with 6% Dysprosium in the primary magnet layer(s) and only 2% Dysprosium in the subordinate layer furthest from the air-gap, the overall or total Dysprosium content is only about 4.2%, thus giving a significant economical advantage over the known rare-earth permanent magnet designs.

As explained in the introduction, the outer edges of a permanent magnet have a higher field strength, so that the demagnetization forces are strongest in these parts of the magnet. For an improved magnet performance, in a particularly preferred embodiment of the invention the magnet layers of the layer stack are dimensioned and/or arranged such that a surface area of a primary magnet layer exposed to an air-gap of the electrical machine is greater than the exposed surface area of any subordinate magnet layer.

The layered magnet according to the invention could have a simple rectangular block shape, so that a cross-section taken orthogonally to a longitudinal axis of the magnet would have a rectangular shape. However, other designs may deliver better performance. For example, the magnet could be designed to have a curved outer surface so that the magnet is highest along its longitudinal axis. The shapes of the individual magnet layers may be adjusted as appropriate. For example, in a horizontal stack arrangement, the primary layer can have a curved upper surface, while the subordinate layers are essentially flat layers. In a vertical stack arrangement, the magnet layers can be moulded different, appropriately designed moulds, to give a 'tall' central subordinate layer and 'short' outer primary layers, whereby the upper surfaces that will be exposed to the air-gap are shaped to follow a predefined curve so that the overall layered magnet or stack has an essentially smooth outer surface.

The outer subordinate layer can have a suitably low concentration of Dysprosium, for example about 2%. Of course, a 'low concentration' can also mean that the layer comprises a negligible amount of Dysprosium, particularly for a layered magnet in which the coercivity of the outermost or lowest layer may not be particularly relevant to the overall magnet design.

The layer structure of the layered magnet according to the invention can be achieved by, for example, filling a suitable form with layers or strata of powder, wherein each powder layer comprises a different Dysprosium concentration. These layers can then be pressed and sintered together. However, in a preferred embodiment of the method according to the invention, the layers are formed individually, and the finished magnet layers are pressed and/or glued together to give a stack. Preferably, the layers have been formed to fit closely together, so that there are no significant gaps between the magnet layers of the stack.

Since a rare-earth permanent magnet is brittle on account of the lanthanide addition, the method according to the invention preferably also comprises the step of arranging the stack in a non-magnetic container for attachment to a rotor or stator of the electrical machine. The container can be made of any suitable material which can be reliably attached to the rotor and which protects the magnet from damage and/or corrosion, for example non-magnetic steel or a plastic.

The electrical machine according to the invention is preferably is a multi-pole generator of a wind turbine, in particular a direct drive generator. Such generators can be realised to perform in a very favourably efficient manner due to the tailored coercivity of the very strong rare-earth layered permanent magnets according to the invention.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a partial cross-section through an electrical machine and field lines at a first time instant;
Fig. 2 shows a partial cross-section through the electrical machine of Fig. 1 with field lines at a second time instant;
Fig. 3 shows a layered magnet according to a first embodiment of the invention;
Fig. 4 shows a layered magnet according to a second embodiment of the invention.

In the diagrams, like numbers refer to like objects throughout. Objects in the diagrams are not necessarily drawn to scale.

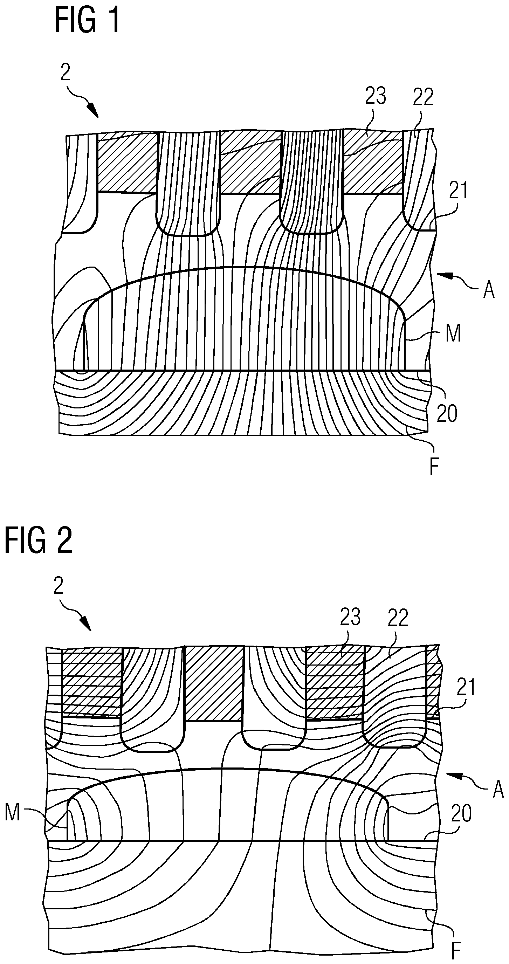

Fig. 1 shows a partial cross-section through an electrical machine 2 and field lines F at a first time instant, for example for a first position of a rotor 20 relative to a stator 21. A permanent magnet M is arranged on an outer surface of the rotor 20. The diagram only shows one magnet for the sake of clarity, but it is to be understood that a plurality of magnets M is arranged on the rotor 20. A multi-pole direct-drive generator of a wind turbine can have a diameter of several metres. For example, a generator with a rotor diameter of about 7 m might have 100 - 200 permanent magnets M arranged on the rotor 20. Each magnet M can be 1.5 m - 2 m in length, depending on the length of the rotor 20 and can be 2 cm or more in height and 15 cm in width.

During operation of the machine 2, the magnetic field F of the magnets M causes a current to be induced in windings 23 arranged between stator teeth 22 of the stator 21. During operation of the machine, the rotor 20 moves in a certain direction relative to the stator 21. The distribution of the magnetic field lines F fluctuates accordingly. However, the demagnetizing field is always stronger at the outer regions of the magnet. Fig. 2 shows another distribution of field lines F. To resist the demagnetizing forces, a high coercivity is required, which is usually achieved by incorporating a relatively high percentage of Dysprosium in the material of the magnet in order to guarantee the required coercivity in the critical regions. However, as the diagrams show, the demagnetizing field is not evenly distributed over the magnet, and is weakest in the regions of the magnet M furthest from the air-gap.

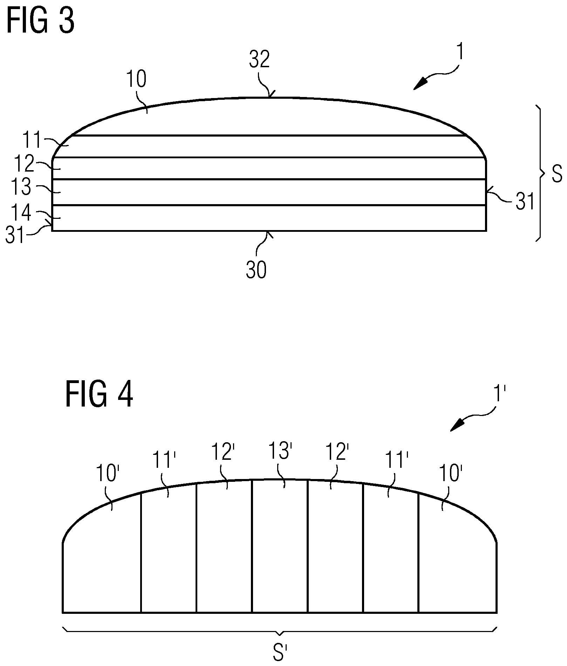

Fig. 3 shows a layered magnet 1 according to a first embodiment of the invention. This layered magnet 1 comprises various layers 10, 11, 12, 13, 14 stacked in a horizontal stack S. The top layer 10, which will be arranged closest to the air-gap, is a primary layer 10 with a high Dysprosium content in the region of 5% - 6%. The remaining layers 11, 12, 13, 14 are subordinate layers, with decreasing concentrations of Dysprosium. For example, the Dysprosium concentration can comprise 3% - 4% in the subordinate layer 11 next to the primary layer 10, and can decrease to a concentration of 2% - 3% in the subordinate layer 14 furthest from the primary layer 10 and therefore also furthest from the air-gap.

Fig. 4 shows a layered magnet 1' according to a second embodiment of the invention. Here, two primary layers 10' are arranged at the outer sides of the magnet 1', and several subordinate layers 11', 12', 13' are sandwiched between the primary layers in a vertical stack S'. Again, the Dysprosium content in the primary layers 10' can be high, in the region of 5% - 6%. The remaining layers 11', 12', 13' can exhibit progressively decreasing concentrations of Dysprosium, for example from 3% - 4% in a subordinate layer 11' next to a primary layer 10', to about 2% - 3% in the central subordinate layer 13' furthest from the primary layers 10' and therefore also furthest from the air-gap.

Both magnet stacks S, S' of Figs. 3 and 4 can be enclosed or sealed in a suitable protective material before mounting onto the rotor of the electrical machine.

For the sake of clarity, it is to be understood that the use of "a" or "an" throughout this application does not exclude a plurality, and "comprising" does not exclude other steps or elements.

## Claims

1. A layered rare-earth permanent magnet (1, 1') for a magnet arrangement of an electrical machine (2), which layered magnet (1, 1') comprises a number of primary magnet layers (10, 10') and a number of subordinate magnet layers (11, 12, 13, 11', 12', 13', 14), wherein each magnet layer (10, 10', 11, 12, 13, 11', 12', 13', 14) comprises a ferromagnet with a layer concentration of a lanthanide, and wherein the layer concentration of the lanthanide is greatest in a primary magnet layer (10, 10'), wherein the primary magnet layer (10, 10') is arranged at an outer region of the layered magnet (1, 1'), **characterized in that** the layered magnet (1, 1') comprises a mounting surface (30) and at least one lateral surface (31), and wherein the layer concentrations of the lanthanide decrease towards the mounting surface (30) and increase towards the lateral surface (31).

2. A layered magnet according to claim 1, wherein the lanthanide comprises Dysprosium, and wherein the layer concentration of Dysprosium in a primary magnet layer (10, 10') comprises at least 5%, and the layer concentration of Dysprosium in a subordinate magnet layer (11, 12, 13, 11', 12', 13', 14) comprises at most 3% of the mass of the magnet layer.

3. A layered magnet according to claim 1 or claim 2, wherein the total Dysprosium content in the magnet layers (10, 10', 11, 12, 13, 11', 12', 13', 14) comprises at most 4.8%, more preferably at most 4.4%, most preferably at most 4% of the mass of the layered magnet (1, 1').

4. A layered magnet according to any of the preceding claims, wherein a primary magnet layer (10, 10') has a layer thickness greater than the thickness of any subordinate magnet layer (11, 12, 13, 11', 12', 13', 14).

5. A layered magnet according to any of the preceding claims, comprising a horizontal stack (S) of magnet layers (10, 11, 12, 13, 14) for arranging essentially parallel to an outer surface of a rotor or stator of the electrical machine (2).

6. A layered magnet according to any of the preceding claims, wherein the layered magnet (1, 1') comprises a vertical stack (S') of magnet layers (10' 11', 12', 13') for arranging essentially perpendicular to an outer surface of a rotor or stator of the electrical machine (2).

7. A method of manufacturing a layered magnet (1, 1') for a magnet arrangement of an electrical machine (2), which method comprises the steps of
- obtaining a number of primary magnet layers (10, 10') and a number of subordinate magnet layers (11, 12, 13, 11', 12', 13', 14), wherein each magnet layer (10, 10', 11, 12, 13, 11', 12', 13', 14) comprises a ferromagnet;
- introducing layer concentrations of a lanthanide in the magnet layers (10, 10', 11, 12, 13, 11', 12', 13', 14) such that the layer concentration of the lanthanide is greatest in a primary magnet layer (10, 10'); and
- arranging the magnet layers (10, 10', 11, 12, 13, 11', 12', 13', 14) to give a layered magnet (M, M') with a mounting surface (30) and at least one lateral surface (31), wherein the layer concentrations of the lanthanide decrease towards the mounting surface (30) and increase towards the lateral surface (31), and wherein the primary magnet layer (10, 10') is arranged at an outer region of the layered magnet (1, 1').

8. A method according to claim 7, wherein the lanthanide fraction of a magnet layer (10, 10', 11, 12, 13, 11', 12', 13', 14) is diffused into that magnet layer (10, 10', 11, 12, 13, 11', 12', 13', 14) in a diffusion process.

9. A method according to claim 7 or claim 8, wherein the layered magnet (1, 1') is assembled by pressing and/or gluing together the magnet layers (10, 10', 11, 12, 13, 11', 12', 13', 14).

10. A magnet arrangement for an electrical machine (2), which magnet arrangement comprises a plurality of layered magnets (10, 10', 11, 12, 13, 11', 12', 13', 14) according to any of claims 1 to 6 arranged on a rotor or stator of the electrical machine (2).

11. An electrical machine (2) comprising a magnet arrangement according to claim 10.

12. An electrical machine according to claim 11, wherein the magnet arrangement is arranged on the rotor (20) of the electrical machine (2).

13. An electrical machine according to claim 12, wherein the electrical machine (2) is a multi-pole generator of a wind turbine.

## Patentansprüche

1. Geschichteter Seltenerd-Permanentmagnet (1, 1') für eine Magnetanordnung einer elektrischen Maschine (2), wobei dieser Schichtmagnet (1, 1') eine Anzahl primärer Magnetschichten (10, 10') und eine Anzahl untergeordneter Magnetschichten (11, 12, 13, 11', 12', 13', 14) umfasst, wobei jede Magnetschicht (10, 10', 11, 12, 13, 11', 12', 13', 14) einen Ferromagneten mit einer Schichtkonzentration eines Lanthanoids umfasst, und wobei die Schichtkonzentration des Lanthanoids in einer primären Magnetschicht (10, 10') am größten ist, wobei die primäre Magnetschicht (10, 10') an einem äußeren Bereich des Schichtmagneten (1, 1') angeordnet ist,
**dadurch gekennzeichnet, dass** der Schichtmagnet (1, 1') eine Montagefläche (30) und wenigstens eine seitliche Fläche (31) umfasst, und wobei die Schichtkonzentrationen des Lanthanoids zu der Montagefläche (30) hin abnehmen und sich zu der seitlichen Fläche (31) hin erhöhen.

2. Schichtmagnet nach Anspruch 1, wobei das Lanthanoid Dysprosium umfasst und wobei die Schichtkonzentration von Dysprosium in einer primären Magnetschicht (10, 10') wenigstens 5 % und die Schichtkonzentration von Dysprosium in einer untergeordneter Magnetschicht (11, 12, 13, 11', 12', 13', 14) höchstens 3 % der Masse der Magnetschicht umfasst.

3. Schichtmagnet nach Anspruch 1 oder Anspruch 2, wobei der Gesamtgehalt an Dysprosium in den Magnetschichten (10, 10', 11, 12, 13, 11', 12', 13', 14) höchstens 4,8 %, stärker bevorzugt höchstens 4,4 % und am stärksten bevorzugt höchstens 4 % der Masse des Schichtmagneten (1, 1') umfasst.

4. Schichtmagnet nach einem der vorhergehenden Ansprüche, wobei eine primäre Magnetschicht (10, 10') eine Schichtdicke aufweist, die größer als die Dicke einer beliebigen untergeordneten Magnetschicht (11, 12, 13, 11', 12', 13', 14) ist.

5. Schichtmagnet nach einem der vorhergehenden Ansprüche, welcher einen horizontalen Stapel (S) von Magnetschichten (10, 11, 12, 13, 14) zum Anordnen im Wesentlichen parallel zu einer äußeren Fläche eines Rotors oder Stators der elektrischen Maschine (2) umfasst.

6. Schichtmagnet nach einem der vorhergehenden Ansprüche, wobei der Schichtmagnet (1, 1') einen vertikalen Stapel (S') von Magnetschichten (10', 11', 12', 13') zum Anordnen im Wesentlichen senkrecht zu einer äußeren Fläche eines Rotors oder Stators der elektrischen Maschine (2) umfasst.

7. Verfahren zur Herstellung eines Schichtmagneten (1, 1') für eine Magnetanordnung einer elektrischen Maschine (2), wobei das Verfahren die folgenden Schritte umfasst:
- Gewinnen einer Anzahl primärer Magnetschichten (10, 10') und einer Anzahl untergeordneter Magnetschichten (11, 12, 13, 11', 12', 13', 14), wobei jede Magnetschicht (10, 10', 11, 12, 13, 11', 12', 13', 14) einen Ferromagneten umfasst;
- Einführen von Schichtkonzentrationen eines Lanthanoids in die Magnetschichten (10, 10', 11, 12, 13, 11', 12', 13', 14), derart, dass die Schichtkonzentration des Lanthanoids in einer primären Magnetschicht (10, 10') am größten ist; und
- Anordnen der Magnetschichten (10, 10', 11, 12, 13, 11', 12', 13', 14), so dass sich ein Schichtmagnet (M, M') mit einer Montagefläche (30) und wenigstens einer seitlichen Fläche (31) ergibt, wobei die Schichtkonzentrationen des Lanthanoids zu der Montagefläche (30) hin abnehmen und sich zu der seitlichen Fläche (31) hin erhöhen, und wobei die primäre Magnetschicht (10, 10') an einem äußeren Bereich des Schichtmagneten (1, 1') angeordnet ist.

8. Verfahren nach Anspruch 7, wobei der Lanthanoid-Anteil einer Magnetschicht (10, 10', 11, 12, 13, 11', 12', 13', 14) in einem Diffusionsprozess in diese Magnetschicht (10, 10', 11, 12, 13, 11', 12', 13', 14) hineindiffundiert wird.

9. Verfahren nach Anspruch 7 oder 8, wobei der Schichtmagnet (1, 1') durch Zusammenpressen und/oder Zusammenkleben der Magnetschichten (10, 10', 11, 12, 13, 11', 12', 13', 14) zusammengebaut wird.

10. Magnetanordnung für eine elektrische Maschine (2), wobei diese Magnetanordnung mehrere Schichtmagnete(10, 10', 11, 12, 13, 11', 12', 13', 14) nach einem der Ansprüche 1 bis 6 umfasst, die an einem Rotor oder Stator der elektrischen Maschine (2) angeordnet sind.

11. Elektrische Maschine (2), welche eine Magnetanordnung nach Anspruch 10 umfasst.

12. Elektrische Maschine nach Anspruch 11, wobei die Magnetanordnung am Rotor (20) der elektrischen Maschine (2) angeordnet ist.

13. Elektrische Maschine nach Anspruch 12, wobei die elektrischen Maschine (2) ein Mehrpolgenerator einer Windenergieanlage ist.

## Revendications

1. Aimant permanent à base de terres rares stratifié (1, 1') pour un agencement d'aimants d'une machine électrique (2), lequel aimant stratifié (1, 1') comprend un certain nombre de couches d'aimant principales (10, 10') et un certain nombre de couches d'aimant secondaires (11, 12, 13, 11', 12', 13', 14), dans lequel chaque couche d'aimant (10, 10', 11, 12, 13, 11', 12', 13', 14) comprend un aimant ferromagnétique avec une concentration de couche d'un lanthanide, et dans lequel la concentration de couche du lanthanide est la plus grande dans une couche d'aimant principale (10, 10'), dans lequel la couche d'aimant principale (10, 10') est agencée au niveau d'une région externe de l'aimant stratifié (1, 1'), **caractérisé en ce que** l'aimant stratifié (1, 1') comprend une surface de montage (30) et au moins une surface latérale (31), et dans lequel les concentrations de couche du lanthanide diminuent vers la surface de montage (30) et augmentent vers la surface latérale (31).

2. Aimant stratifié selon la revendication 1, dans lequel le lanthanide comprend du Dysprosium, et dans lequel la concentration de couche de Dysprosium dans une couche d'aimant principale (10, 10') représente au moins 5 %, et la concentration de couche de Dysprosium dans une couche d'aimant secondaire (11, 12, 13, 11', 12', 13', 14) représente au plus 3 % de la masse de la couche d'aimant.

3. Aimant stratifié selon la revendication 1 ou la revendication 2, dans lequel la teneur totale en Dysprosium dans les couches d'aimant (10, 10', 11, 12, 13, 11', 12', 13', 14) représente au plus 4,8 %, plus préférablement au plus 4,4 %, de manière préférée entre toutes au plus 4 % de la masse de l'aimant stratifié (1, 1').

4. Aimant stratifié selon l'une quelconque des revendications précédentes, dans lequel une couche d'aimant principale (10, 10') présente une épaisseur de couche supérieure à l'épaisseur d'une couche d'aimant secondaire quelconque (11, 12, 13, 11', 12', 13', 14).

5. Aimant stratifié selon l'une quelconque des revendications précédentes, comprenant un empilement horizontal (S) de couches d'aimant (10, 11, 12, 13, 14) pour un agencement essentiellement parallèle à une surface externe d'un rotor ou stator de la machine électrique (2).

6. Aimant stratifié selon l'une quelconque des revendications précédentes, l'aimant stratifié (1, 1') comprenant un empilement vertical (S') de couches d'aimant (10', 11', 12', 13') pour un agencement essentiellement perpendiculaire à une surface externe d'un rotor ou stator de la machine électrique (2).

7. Méthode de fabrication d'un aimant stratifié (1, 1') pour un agencement d'aimants d'une machine électrique (2), laquelle méthode comprend les étapes consistant
- à obtenir un certain nombre de couches d'aimant principales (10, 10') et un certain nombre de couches d'aimant secondaires (11, 12, 13, 11', 12', 13', 14), dans laquelle chaque couche d'aimant (10, 10', 11, 12, 13, 11', 12', 13', 14) comprend un aimant ferromagnétique ;
- à introduire des concentrations de couche d'un lanthanide dans les couches d'aimant (10, 10', 11, 12, 13, 11', 12', 13', 14) de telle sorte que la concentration de couche du lanthanide soit la plus grande dans une couche d'aimant principale (10, 10') ; et
- à agencer les couches d'aimant (10, 10', 11, 12, 13, 11', 12', 13', 14) afin de donner un aimant stratifié (M, M') avec une surface de montage (30) et au moins une surface latérale (31), dans laquelle les concentrations de couche du lanthanide diminuent vers la surface de montage (30) et augmentent vers la surface latérale (31), et dans laquelle la couche d'aimant principale (10, 10') est agencée au niveau d'une région externe de l'aimant stratifié (1, 1').

8. Méthode selon la revendication 7, dans laquelle la fraction de lanthanide d'une couche d'aimant (10, 10', 11, 12, 13, 11', 12', 13', 14) est diffusée à l'intérieur de cette couche d'aimant (10, 10', 11, 12, 13, 11', 12', 13', 14) dans un processus de diffusion.

9. Méthode selon la revendication 7 ou la revendication 8, dans laquelle l'aimant stratifié (1, 1') est assemblé en pressant les unes contre les autres et/ou en collant les unes aux autres les couches d'aimant (10, 10', 11, 12, 13, 11', 12', 13', 14).

10. Agencement d'aimants pour une machine électrique (2), lequel agencement d'aimants comprend une pluralité d'aimants stratifiés (10, 10', 11, 12, 13, 11', 12', 13', 14) selon l'une quelconque des revendications 1 à 6 agencés sur un rotor ou stator de la machine électrique (2).

11. Machine électrique (2) comprenant un agencement d'aimants selon la revendication 10.

12. Machine électrique selon la revendication 11, dans laquelle l'agencement d'aimants est agencé sur le rotor (20) de la machine électrique (2).

13. Machine électrique selon la revendication 12, la machine électrique (2) étant un générateur multipolaire d'une éolienne.
